# NEW EUROPEAN PATENT SPECIFICATION

(11) **EP 0 646 507 B2**
(45) Date of publication and mention of the opposition decision: **04.12.2002**
(45) Mention of the grant of the patent: 16.12.1998
(21) Application number: 94307247.0
(22) Date of filing: 04.10.1994
(51) Int. Cl.: B60S 1/38

(54) **Wiper blade assembly**
Verbindungselement für Scheibenwischerblatt
Ensemble de lame d'essuie-glace

(30) Priority: 05.10.1993 AU PM164693
(43) Date of publication of application: 05.04.1995
(73) Proprietor: TRICO PRODUCTS CORPORATION, Buffalo, NY 14301 (US)
(72) Inventor: Burton, Edward, North Dandenong, Victoria 3175 (AU); Volkoff, Victor, Narre Warren North, Victoria 3804 (AU)
(74) Representative: James, Michael John Gwynne

(56) References cited:
- DE-A- 2 505 176
- DE-A- 2 506 128
- DE-A- 2 551 913
- DE-A- 2 948 903
- DE-A- 3 340 404
- DE-U- 8 616 349
- DE-U- 8 713 171
- DE-U- 9 201 307
- GB-A- 2 154 863
- GB-A- 2 238 713
- US-A- 2 983 945
- US-A- 4 271 558

## Description

The present invention relates to improvements in wiper blade assemblies and in particular to means for securing a resilient (elastomeric) wiping element to a harness assembly therefor in a manner permitting the wiping element to be replaced when worn but otherwise enabling the wiping element to be securely held to the harness during use.

Commonly, in the prior art, elastomeric wiping elements were individually moulded in relatively complicated shapes so that the shape of the element cooperated with other fastening arrangements on the harness to releasably secure the wiping element thereto. While these arrangements have worked satisfactorily, they do have a number of practical disadvantages. Firstly, the actual moulding processes required for production of the wiping element are expensive particularly where the mould is necessarily complicated because of a complicated wiping element shape. Secondly, such wiping elements are capable of use only with one particular harness arrangement for which it was developed and there is no prospect of being able to interchange these wiping elements with other styles of harness. U.S. Patent No. 3,153,254 illustrates an arrangement of the aforementioned kind wherein a wiping element is shaped by moulding so that it is configured at least at its ends to accommodate a latch including an end clip located at either end. A backing strip is used to stiffen the wiping element and included longitudinally extending legs received in grooves in the wiping element with the legs being connected at one end. The end clips each are bifurcated so that respective legs fit on either side of a central web of the wiping element. Outwardly facing notches of each of the legs of the clip engage on inner and outer edges of an outer claw of the harness. The harness also encompasses the legs of the backing strip. The wiping element is configured at either end to accommodate the end clips which by their bifurcated configuration retain the wiping element therebetween.

Further to the foregoing, arrangements have also been proposed in the prior art using extruded elastomeric wiping elements which have essentially the same cross-sectional shape along their complete lengths. Such wiping elements can be produced very inexpensively when compared to moulded elastomeric wiping elements and are therefore to be preferred for this reason, however it is still necessary to be able to provide the wiping element with a simple backing support and with means to reliably secure the wiping element and the backing support to a harness while still permitting separation of these parts when it is desired to replace the wiping element.

U.S. Patent No. 4,075,731 discloses an arrangement of the aforementioned kind. In this disclosure, a sub-assembly is provided comprising the wiping element, a backing strip having longitudinal legs located in longitudinal grooves in the wiping element and a latch member retaining the backing strip to the wiping element. The legs of the backing strip are joined at one end and a downwardly depending tab from this position abuts an end of the wiping element. The latch is formed by a flat U shaped metal end clip provided at one end only of the assembly so that inner notches engage with the downwardly depending tab of the backing strip and outwardly located notches engage with on inner and outer edges of an outer claw of the harness. The elastomeric wiping element is retained to the other members of the sub-assembly essentially by pressure applied by narrowed spacing between the interal edges of the legs of the backing strip midway along the legs. It it is required to replace a worn wiping element, it is necessary to replace the entire sub-assembly. Moreover, the backing strip is necessarily a relatively complicated shape and would be fairly expensive to produce.

DE-U-8616349.3 discloses a U-shaped clip which has retaining means extending from the side arms of the clip. The retaining means engage a rail of a wiper assembly in the horizontal direction.

Australian Patent Specification AU-B-64935/80 discloses a still further known arrangement wherein a backing strip is provided in the form of an elongated part having a longitudinally extending T shaped slot to receive a T shaped head of the wiping element. The backing strip in this case is secured to the wiping element by a single clip with a portion of the clip extending between the top surface of the T shaped head of the wiping element and the adjacent surface of the T shaped slot of the backing strip. The aforementioned portion of the clip terminates in a downward projection that presses into the resilient wiping element and thereby retains the clip to the wiping element and the backing strip. The upper part of the clips is bifurcated and includes outer notches to engage on inner and outer edges of an end claw of the harness structure. This structure does have some practical disadvantages including that the wiper element, although capable of being extruded, is only useable with the form of backing strip disclosed and therefore universal application and replaceability is not possible. Further, although the wiping element is fixed relative to the clip, the backing strip is only retained by pressure and can in some circumstances operate from the remainder of the assembly. Finally, the backing strip itself is a relatively expensive item to provide in the overall assembly.

Australian Patent Specification No. 605267 (AU-B-13888/88) discloses, in one embodiment, an arrangement comprising a clip part releasably attachable to the end of a specially formed harness which, when removed allows the wiping element to be replaced, and when applied retains the wiping element in an operational position. While an extruded wiping element can be used in this arrangement, it does have a disadvantage in that it required the use of a specially formed harness and cannot therefore be used with a range of conventional harness structures commonly in use at the present time.

Finally, U.S.Patent Specification No. 4,782,549 discloses a still further arrangement comprising an extruded wiping element with twin rail vertebrae as the backing support engaged in opposed grooves in the head of the wiping element. The wiping element is retained by pressed and thereby laterally widened portions along the inner and outer edges of the rail vertebrae. The inner portions press into the web of the wiping element between the opposed grooves and the outer portions cooperate with the outer claw of a relatively conventional harness structure so that when assembled the vertebrae, the wiping element and the harness are held in relative positions. This arrangement has the advantage that it is quite inexpensive to produce in that it uses an extruded rubber or other elastomeric material wiping element and the twin rail vertebrae are basicaly simple metal strips requiring essentially a one step forming operation to establish the laterally widened portions. The arrangement does, however, have the disadvantage that the wiping element is secured only be friction pressure of the inner widened portions of the rails and if this pressure is sufficient to prevent movement in use, the wiping element, when worn can only be replaced by splaying the claw of the harness and thereafter forcing the claw back to the closed position when the new wiping element is installed. This is of course a difficult operation and moveover can only be done a limited number of times before the claw (and thereby the harness) will physically fail and require replacing.

The present invention seeks to provide an arrangement in a wiper assembly which will permit the use of a relatively inexpensive wiper blade assembly including an extruded rubber or other elastomeric material wiping element with a simple backing support means in a substantially conventional harness support structure having primary and secondarly yokes with claws of the secondary yokes holding the wiper blade assembly. The arrangement is such as to positively hold the wiper blade assembly in position during use but allows the wiping element to be replaced in a simple manner when desired. A preferred embodiment of the present invention seeks to provide a clip element capable of use in an arrangement as aforesaid to positively hold a wiper blade assembly in operational position but allow the wiping element to be replaced when desired.

"Accordingly the present invention provides a clip member adapted, in use, to secure a wiper blade sub-assembly to a harness of a wiper mechanism, said wiper blade sub-assembly comprising a wiping element and a backing support means including longitudinally extending rails received in longitudinally extending grooves in a head region of the wiping element, said harness including a plurality of claws adapted to be slidably received over the head region of said wiping element including said rails, the clip member including an inboard first abutment means adapted to engage an outer said claw of the harness and retainer means adapted to engage with a formation on a least one of the rails of the wiper assembly to prevent movement of the clip member outwardly relative to said rails, the clip member further including second abutment means adapted, in use, to engage an end of the wiping element thereby preventing outward movement of the wiping element relative to the rails), the clip member being a generally U-shaped housing body viewed in transverse cross-section having a top wall and two depending side walls extending downwardly from said top wall, characterised in that the top wall, incorporates a flexible tang detached from said side walls, said tang being separated from the second abutment means by a gap, and wherein the end region of the tang nearest to the second abutment means forms said retainer means as a projection extending down from the tang, said projection being adapted, in use, to engage a formation in the form of a tab comprising a bent-up end of at least one of the rails of the wiper blade sub-assembly".

Conveniently, the said formation means are/located at opposite end regions of said rail or rails and a respective said clip member is provided adapted in use, to cooperate with each said end regions.

The rails are preferably separate from one another for simplicity of production but need not necessarily be so formed. The formation means may conveniently comprise either a notch formed in an outer edge of the rail adjacent each longitudinal end of the rail or alternatively each end of the rail may be bent to form the desired formation means of the clip member according to the invention.

Preferably, said second abutment means is formed by a portion of the housing body extending inwardly from at least one of the side walls located at or adjacent to an outer (in use) end of said clip member.

The invention will now be desribed in greater detail, by way of example, with reference to the drawings, in which:-
Figure 1 is a perspective view of a clip member not forming part of the invention, but being used to assist in understanding of the claimed invention.
Figure 2 is a side elevation showing the clip member of Figure 1 applied to a wiper blade assembly;
Figure 3 is an underneath plan view of Figure 2;
Figure 4 is a detailed cross-section view taken along line IV-IV of Figure 2;
Figure 5 is a detailed cross-section view taken along line V-V of Figure 3;
Figure 6 is a detailed cross-section of a wiper assembly, one end of which is similar to Figure 4 with an alternative arrangement shown at the other end;
Figure 7 is a perspective view of a clip member according to the present invention;
Figure 8 is a side elevation showing the clip member of Figure 7 aplied to a wiper blade assembly;
Figure 9 is an end elevation view of Figure 8;
Figure 10 is a top plan view of Figure 8; and
Figure 11 is a cross-sectional view taken along line X-X of Figure 10.

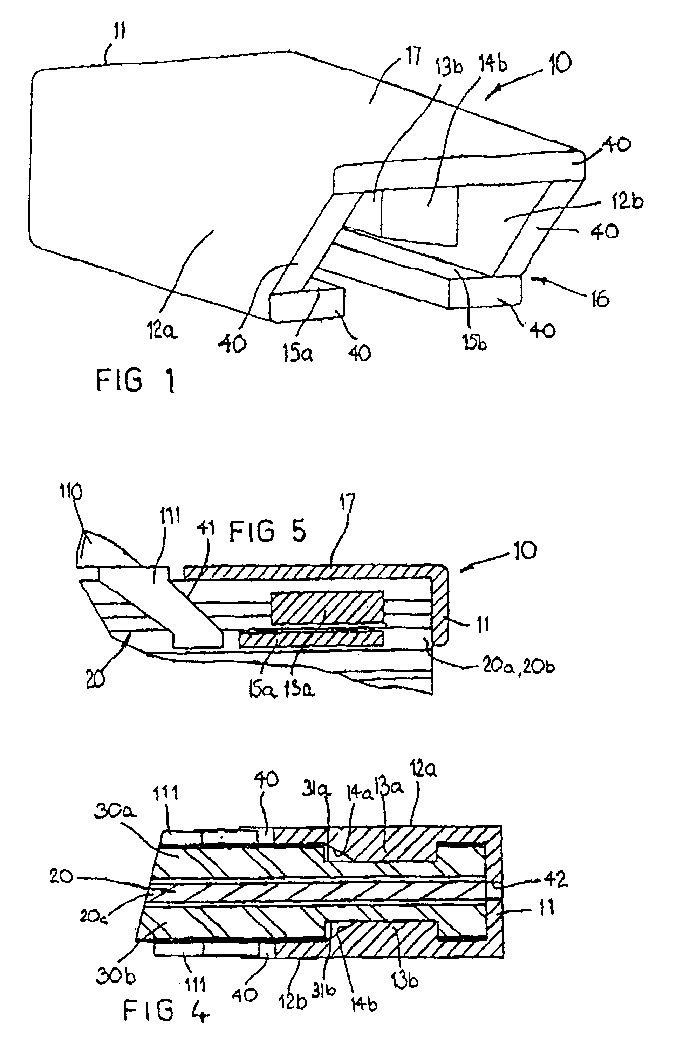

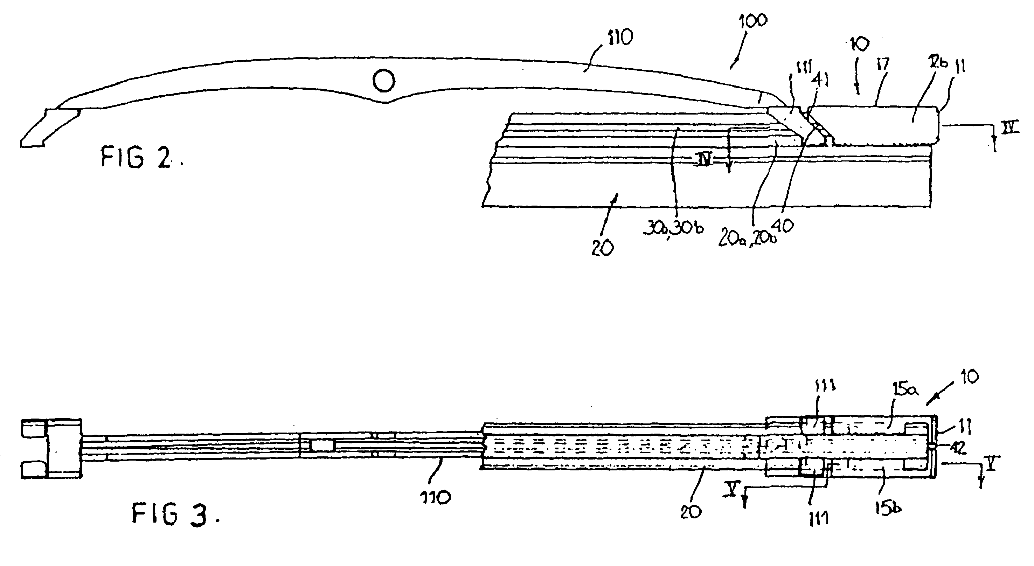

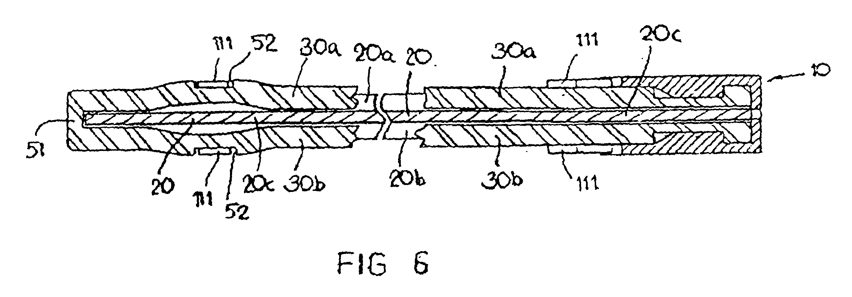

Figures 1 to 5 illustrate retaining clip member 10. The clip member 10 is of a general channel section and has an end wall 11 for abutting against the end of a wiping element 20. A bar 13a, 13b projects inwardly from opposed side walls 12a and 12b and is adapted to engage in notches or indents 31a, 31b complementarily located in twin backing rails 30a, 30b. The bars 13a and 13b have a ramp surface 14a, 14b facing towards an inboard end 16 of the clip member 10 for assisting in sliding the clip member 10 into position on a wiper blade assembly. Further, the end wall 11 may, if desired, include a slot 42 to improve flexibility of the side walls 12a, 12b. The channel sectioned clip member 10 has a pair of opposed inwardly projecting ledge portions 15a, 15b extending from the side walls 12a, 12b for locating in grooves 20a, 20b on either side of the central web 20c of the wiping element 20. The wiping element 20 is conveniently formed by extruding a suitable rubber or other elastomeric material in the desired cross-sectional shape which is constant along its length. The open mouth of the inboard end 16 of the clip member 10 is obliquely cut away so as to provide an abutment surface 40 that corresponds in shape to the outer edge surface 41 of the outer claw 111 of a yoke 110 of a blade harness.

To put a clip member 10 in position on a wiper blade assembly 100, the twin rails 30a, 30b should be in position in grooves on the wiping element 20 on either side of the central web 20c thereof. The harness yoke 110 should also be in position with its claw 111 around an upper region of the wiper element 20, although it may be slid into position subsequent to the positioning of the dip member 10 on the wiping element 20 and twin rails 30a, 30b. The clip member 10 is slid onto the wiping element 20 so that the top wall 17 of the channel section abuts an upper transverse surface of the wiping element 20. The bars 13a and 13b snap fit into the indents 31a and 31b in the respective twin rails 30a and 30b. The procedure is repeated for the opposite end of the assembly so that end clip members are provided at both ends.

To remove a clip member 10 from a wiper blade assembly so that a replacement wiping element can be fitted, the wiping element 20 is forced back from the clip member 10 by urging against its resilience towards the opposed end of the assembly. This leaves the twin rails 30a, 30b exposed in the end region so that they can move inwardly to disengage the bars 13a, 13b from their respective indents or notches 31a,31b. This then allows the clip member to be removed and also allows removal of the wiping element to be replaced with a new such element as desired.

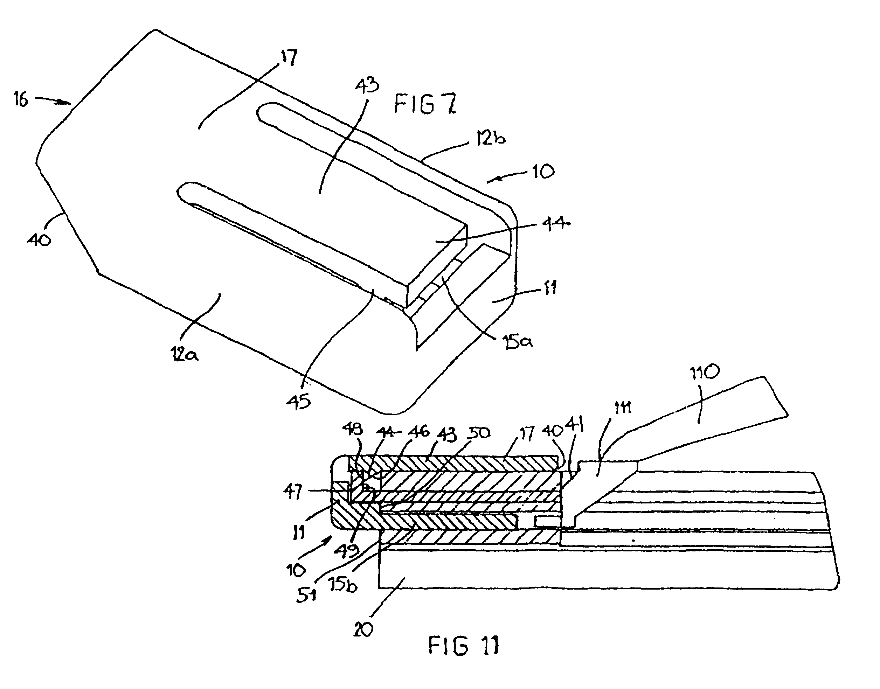

Figure 6 illustrates utilizing a clip member 10 and cooperating rail portions at one end similar to that described with reference to figures 1 to 5. It will be recognised that the clip member 10 and cooperating parts might also be configured as hereinafter described with reference to figure 7 to 11. At the other end of the assembly, the twin rails 30a and 30b are joined by a bridging piece 51. Adjacent the claws 111, cut out sections 52 are provided in the rails 30a and 30b so as to position and locate the claw 111 therein. The rails 30a and 30b may be deformed or bowed outwardly in the region of the cut out sections 52 so as to assist with co-operation with the claw 111.

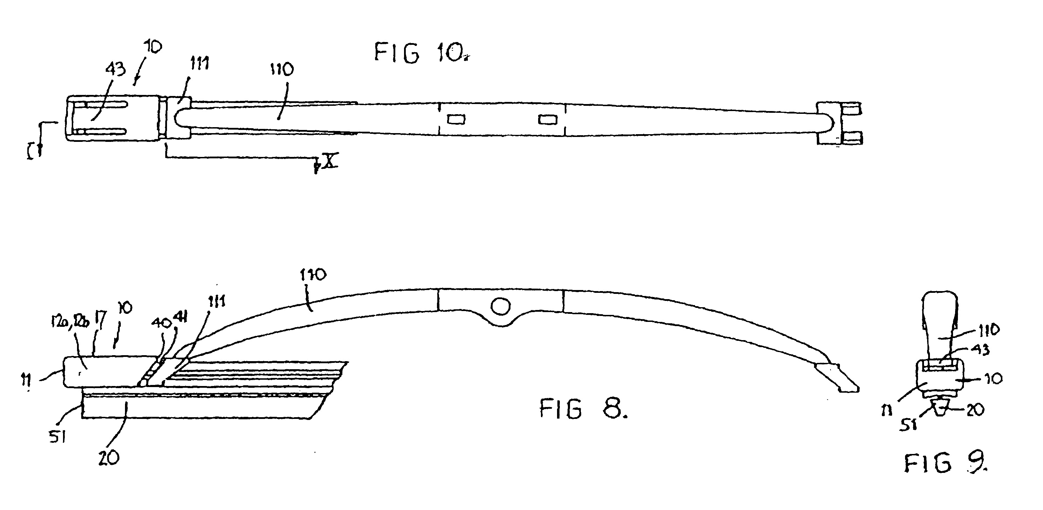

Figures 7 to 11 illustrate an embodiment of the present invention wherein like features have been given the same reference numbers as in the earlier description. The clip member 10 has a top wall 17, side walls 12a, 12b and an end wall 11. Instead of the bars 13a, 13b engaging in notches 31a, 31b in this embodiment a flexible tang 43 is formed from the top wall 17 of the clip member 10. The end 44 of the tang 43 nearest to the end wall 11 has the greatest freedom of movement and includes an inwardly directed projection 45 extending from this end. The projection has a ramped surface 46 facing towards the inboard or open mouthed end 16 of the clip member 10. As is best seen in Figure 10, the clip member 10 may be slid onto an end of the wiper blade assembly comprising the extruded wiping element 20 and the rails 30a, 30b. In so doing the ramped surface 46 rides over upturned ends 47 of the rails 30a, 30b so that the outboard face 48 of the projection 45 catches on an inner edge surface 49 of the upturnd ends 47. At this point, an outboard abutment surface 50 formed within the clip member 10 engages an out end 51 of the wiping element 20. Thus the clip member 10 is constrained against movement in an outboard direction relative to the rails 30a, 30b by the projection surface 48 engaging the rail inner end surfaces 49. Similarly, the wiping element 20 is constrained against outboard movement relative to the clip member 10 by engagement of the end surface 51 with the abutment surface 50 within the clip member 10. To replace a worn wiping element with this embodiment, all that is necessary is for the tang 43 to be levered upwardly so that the clip member 10 can be slid off the wiper blade sub-assembly.

One possible further embodiment might be to provide tangs similar to 43 in the side walls of the clip member 10 to cooperate with notches or detents in the rails 30a, 30b similar to those of Figures 1 to 5. It will also be appreciated that although the illustrations show the projections 13a, 13b (Figures 1 to 5) or the projection 45 (Figures 7 to 11) cooperating with both rails, it is not essential to the invention that this occurs.

The projections might for example cooperate with only one of the rails.

It will be further appreciated that apart from the foregoing noted differences, the embodiments discussed above with reference to figures 7 to 11 operate in a similar fashion to clips discussed earlier with reference to figures 1 to 5. The wiper assembly includes a pair of clip members at either end which cooperate with the rails so that the clip members, when applied, cannot move outwardly relative to the rails. At the same time, the clip members themselves function to prevent the wiping element from moving in an outboard direction relative to the clip members. Finally, the clip members, when assembled, cooperate with the outer edges of the outer claws of the harness structure to locate the wiper sub-assembly including the clip members thereon.

It will, of course, be further recognised that one clip member as disclosed with reference to figures 7 to 11 could be used at one end of the arrangement as illustrated in figure 6. Wiper assemblies of all the above discussed configurations are commonly required to pass testing procedures imposed by customers when the wiper assembly is to be used as original equipment on motor vehicles. One commonly used such test is to twice drop the assembly end on from a predetermined height (usually two metres) with each end respectively bearing the impact. To pass this test, the assembly must remain intact after both drops. It is believed that all the embodiments of the present invention will pass this test as the impact in each case is borne by the respective end clips without any loads being transferred that would in effect allow the assembly to disengage. By the arrangements disclosed herein, it is possible to use extruded rubber or elastomeric material wiping elements with very simple twin rail vertebrae which provides an effective and quite inexpensive assembly even allowing for additional costs associated with the clip members.

## Claims

1. A clip member (10) adapted, in use, to secure a wiper blade sub-assembly to a harness of a wiper mechanism, said wiper blade sub-assembly comprising a wiping element (20) and a backing support means including longitudinally extending rails (30a, 30b) received in longitudinally extending grooves in a head region of the wiping element (20), said harness including a plurality of claws (111) adapted to be slidably received over the head region of said wiping element (20) including said rails (30a, 30b), the clip member (10) including an inboard first abutment means (40) adapted to engage an outer said claw (111) of the harness and retainer means (45) adapted to engage with a formation (47) on at least one of the rails (30a, 30b) of the wiper assembly to prevent movement of the clip member (10) outwardly relative to said rails (30a, 30b), the clip member (10) further including second abutment means (11) adapted, in use, to engage an end of the wiping element (20) thereby preventing outward movement of the wiping element (20) relative to the rails (30a, 30b), the clip member being a generally U-shaped housing body viewed in transverse cross-section having a top wall (17) and two depending side walls (12a, 12b) extending downwardly from said top wall (17), **characterised in that** the top wall (17), incorporates a flexible tang (43) detached from said side walls (12a, 12b), said tang being separated from the second abutment means (11) by a gap, and wherein the end region of the tang nearest to the second abutment means (11) forms said retainer means as a projection (45) extending down from the tang (43), said projection (45) being adapted, in use, to engage a formation (47) in the form of a tab comprising a bent-up end of at least one of the rails (30a, 30b) of the wiper blade sub-assembly.

2. A clip member according to claim 1, **characterized by** said second abutment means (11) being formed by a portion of the housing body extending inwardly from at least one of said side walls (12a, 12b) located at or adjacent to an outer (in use) end of said clip member (10).

3. A clip member according to claim 2, **characterised in that** said portion comprises an end wall (11) of said body.

4. A clip member according to claim 2 or claim 3, **characterised in that** said second abutment means also acts as an end stop for the tab formation (47) on at least one of the rails (30a, 30b).

5. A clip member according to claim 3 or claim 4, **characterised in that** the first abutment means is formed by at least one inner (in use) edge (40) of a said side wall (12a, 12b) of the housing body.

6. A clip member according to claim 4 or claim 5, **characterised in that** at least one of said side walls (12a, 12b) includes an inwardly directed projection (15a, 15b) adapted to be located in a groove of the head region of the wiper element (20).

7. A wiper blade arrangement for use in a wiper mechanism including a harness having claws (111) for connecting said harness to the wiper blade arrangement, said wiper blade arrangement comprising a wiping element (20) having backing support means including longitudinally extending rails (30a, 30b) received in longitudinally extending grooves in a head region of the wiping element (20), said arrangement having a clip member according to any one of claims 1 to 6 at at least one end of the wiping element engaging with formation means (47) in the form of a tab comprising a berit-up end of at least one of the rails (30a, 30b).

8. A wiper blade arrangement according to claim 7 **characterised in that** said formation means (47) are located at opposite end regions of said rails and a respective said clip member (10) is provided adapted, in use, to co-operate with each of said end regions.

9. A wiper blade sub-assembly comprising a wiper element (20), a backing support means including longitudinally extending rails (30a, 30b) received in longitudinally extending grooves in a head region of the wiping element (20), and at least one clip member (10) according to any one of claims 1 to 6 engaging with formation means (47) in the form of a tab comprising a bent-up end of at least one of the rails (30a, 30b).

10. A wiper mechanism including a wiper blade sub-assembly according to claim 9.

## Patentansprüche

1. Clip-Element (10), welches zum Befestigen einer Wischerblatt-Baugruppe an einem Bügel des Wischmechanismus ausgebildet ist, wobei die Wischerblatt-Baugruppe ein Wischerelement (20) und Verstärkungsträgermittel mit sich in Längsrichtung erstreckenden Schienen (30a, 30b), die in Längsnuten im Kopfbereich des Wischerelements (20) aufgenommen sind, umfaßt, wobei der Bügel mehrere Krallen (111) aufweist, welche auf dem Kopfbereich des Wischerelements (20) einschließlich der Schienen (30a, 30b) verschiebbar ausgebildet sind, wobei das Clip-Element (10) ein nach innen gerichtetes erstes Anschlagmittel (40), welches in eine äußere Kralle (111) des Bügels eingreift, und Rückhaltemittel (45), welche zum Eingriff mit einer Formation (47) auf wenigstens einer der Schienen (30a, 30b) der Wischeranordnung ausgebildet sind, aufweist, um eine Bewegung des Clip-Elementes (10) auswärts relativ zu den Schienen (30a, 30b) zu vermeiden, wobei das Clip-Element (10) ferner zweite Anschlagmittel (11) aufweist, welche zum Eingriff eines Endes des Wischerelements (20) ausgebildet sind, wodurch eine Auswärtsbewegung des Wischerelements (20) relativ zu den Schienen (30a, 30b) verhindert ist, wobei das Clip-Element im Querschnitt betrachtet im wesentlichen als U-förmiger Gehäusekörper ausgebildet ist, mit einer oberen Wand (17) und zwei angebundenen Seitenwänden (12a, 12b), welche sich von der oberen Wand (17) abwärts erstrecken,
**dadurch gekennzeichnet,**
**daß** die obere Wand (17) eine flexible, von den Seitenwänden (12a, 12b) gelöste Zunge (43) aufweist, welche um einen Spalt von dem zweiten Anschlagmittel (11) beabstandet ist, und wobei der dem zweiten Anschlagmittel (1) nächstgelegene Endbereich der Zunge das Rückhaltemittel als eine Erhebung (45) ausbildet, welche sich von der Zunge (43) abwärts erstreckt, wobei die Erhebung (45) zum Eingriff einer Formation (47) in Form einer Lasche ausgebildet ist, welche ein aufgebogenes Ende von wenigstens einer der Schienen (30a, 30b) der Wischerblatt-Baugruppe aufweist.

2. Clip-Element nach Anspruch 1, **dadurch gekennzeichnet, daß** das zweite Anschlagmittel (11) von einem Abschnitt des Gehäusekörpers, welcher sich am oder benachbart zum (im Gebrauch) äußeren Ende des Clip-Elementes (10) einwärts von wenigstens einer der Seitenwände (12a, 12b) erstreckt, ausgebildet ist.

3. Clip-Element nach Anspruch 2, **dadurch gekennzeichnet, daß** der Abschnitt eine Endwand (11) des Körpers umfaßt.

4. Clip-Element nach Anspruch 2 oder 3, **dadurch gekennzeichnet, daß** das zweite Anschlagmittel ebenfalls als Endanschlag für die Laschenformation (47) auf wenigstens einer der Schienen (30a, 30b) wirkt.

5. Clip-Element nach Anspruch 3 oder 4, **dadurch gekennzeichnet, daß** das erste Anschlagmittel durch wenigstens eine (im Gebrauch) innere Kante (40) der Seitenwand (12a, 12b) des Gehäusekörpers ausgebildet ist.

6. Clip-Element nach Anspruch 4 oder 5, **dadurch gekennzeichnet, daß** wenigstens eine der Seitenwände (12a, 12b) eine einwärts gerichtete Erhebung (15a, 15b) aufweist, welche in einer Nut des Kopfbereiches des Wischerelements (20) angeordnet ist.

7. Wischerblattanordnung zur Verwendung in einem Wischermechanismus mit einem Bügel mit Krallen (111) zum Verbinden des Bügels mit einer Wischerblattanordnung, wobei die Wischerblattanordnung ein Wischerelement (20) mit Verstärkungsträgermitteln mit sich in Längsrichtung erstreckenden Schienen (30a, 30b), die in Längsnuten im Kopfbereich des Wischerelements (20) aufgenommen sind, aufweist, wobei die Anordnung ein Clip-Element gemäß wenigstens einem der Ansprüche 1 bis 6 an wenigstens einem Ende des Wischerelements aufweist, welches mit Formationsmitteln (47) in Form von einer Lasche mit einem aufgebogenen Ende von wenigstens einer der Schienen (30a, 30b) ineinander greift.

8. Wischerblattanordnung nach Anspruch 7, **dadurch gekennzeichnet, daß** die Formationsmittel (47) an gegenüberliegenden Endbereichen der Schienen angeordnet sind und ein jeweiliges Clip-Element (10) derart ausgebildet und angeordnet ist, daß dieses mit jedem der Endbereiche zusammenwirkt.

9. Wischerblatt-Baugruppe mit einem Wischerelement (20), einem Verstärkungsträgermittel mit sich in Längsrichtung erstreckenden Schienen (30a, 30b), die in Längsnuten im Kopfbereich des Wischerelements (20) aufgenommen sind, und mit wenigstens einem Clip-Element (10) gemäß wenigstens einem der Ansprüche 1 bis 6, welches mit Formationsmitteln (47) in Form einer Lasche, welche ein aufgebogenes Ende von wenigstens einer der Schienen (30a, 30b) aufweist, ineinander greift.

10. Wischermechanismus mit einer Wischerblatt-Baugruppe gemäß Anspruch 9.

## Revendications

1. Elément d'étrier (10) adapté, à l'utilisation, pour fixer un sous-ensemble de lame d'essuie-glace à un harnais d'un mécanisme d'essuie-glace, ledit sous-ensemble de lame d'essuie-glace comprenant un élément d'essuyage (20) et un moyen de support comprenant des rails (30a, 30b) s'étendant longitudinalement, reçus dans des rainures s'étendant longitudinalement dans une région de tête de l'élément d'essuyage (20), ledit harnais comprenant une pluralité de griffes (111) adaptées pour être reçues de façon coulissante sur la région de tête dudit élément d'essuyage (20) comprenant lesdits rails (30a, 30b), l'élément d'étrier (10) comprenant un premier moyen de butée en dedans (40), adapté pour engager une griffe précitée externe (111) du harnais et un moyen de retenue (45) adapté pour s'engager avec une formation (47) sur au moins l'un des rails (30a, 30b) de l'ensemble d'essuie-glace pour empêcher un mouvement de l'élément d'étrier (10) vers l'extérieur par rapport auxdits rails (30a, 30b), l'élément d'étrier (10) comprenant en outre un deuxième moyen de butée (11) adapté, à l'utilisation, pour engager une extrémité de l'élément d'essuyage (20), empêchant de cette façon un mouvement vers l'extérieur de l'élément d'essuyage (20) par rapport aux rails (30a, 30b), l'élément d'étrier étant un corps de logement ayant la forme générale d'un U vu en coupe transversale ayant une paroi supérieure (17) et deux parois latérales pendantes (12a, 12b) s'étendant vers le bas à partir de ladite paroi supérieure (17),
**caractérisé par le fait que** la paroi supérieure (17) incorpore un talon flexible (43) détaché desdites parois latérales (12a, 12b), ledit talon étant séparé du deuxième moyen de butée (11) par un intervalle, et dans lequel la région d'extrémité du talon la plus proche du deuxième moyen de butée (11) forme ledit moyen de retenue en tant que projection (45) s'étendant vers le bas à partir du talon (43), ladite projection (45) étant adaptée, à l'utilisation, pour s'engager avec une formation (47) sous la forme d'une patte comprenant une extrémité recourbée vers le haut d'au moins l'un des rails (30a, 30b) du sous-ensemble de lame d'essuie-glace.

2. Elément d'étrier selon la revendication 1, **caractérisé par le fait que** ledit deuxième moyen de butée (11) est formé par une partie du corps de logement s'étendant vers l'intérieur à partir d'au moins l'une desdites parois latérales (12a, 12b) situées à ou au voisinage d'une extrémité extérieure (à l'utilisation) dudit élément d'étrier (10).

3. Elément d'étrier selon la revendication 2, **caractérisé par le fait que** ladite partie comprend une paroi d'extrémité (11) dudit corps.

4. Elément d'étrier selon la revendication 2 ou la revendication 3, **caractérisé par le fait que** ledit deuxième moyen de butée agit également comme butée d'extrémité pour la formation de patte (47) sur au moins l'un des rails (30a, 30b).

5. Elément d'étrier selon la revendication 3 ou la revendication 4, **caractérisé par le fait que** le premier moyen de butée est formé par au moins une bordure interne (à l'utilisation) (40) d'une paroi latérale précitée (12a, 12b) du corps de logement.

6. Elément d'étrier selon la revendication 4 ou la revendication 5, **caractérisé par le fait qu'**au moins l'une desdites parois latérales (12a, 12b) comprend une projection (15a, 15b) dirigée vers l'intérieur, adaptée pour être située dans une rainure de la région de tête de l'élément d'essuyage (20).

7. Dispositif de lame d'essuie-glace destiné à être utilisé dans un mécanisme d'essuie-glace comprenant un harnais ayant des griffes (111) en vue de la connexion dudit harnais au dispositif de lame d'essuie-glace, ledit dispositif de lame d'essuie-glace comprenant un élément d'essuyage (20) ayant un moyen de support comprenant des rails (30a, 30b) s'étendant longitudinalement, reçus dans des rainures s'étendant longitudinalement dans une région de tête de l'élément d'essuyage (20), ledit dispositif ayant un élément d'étrier tel que défini à l'une quelconque des revendications 1 à 6, à au moins une extrémité de l'élément d'essuyage s'engageant avec des moyens de formation (47) sous la forme d'une patte comprenant une extrémité recourbée vers le haut d'au moins l'un desdits rails (30a, 30b).

8. Dispositif de lame d'essuie-glace selon la revendication 7, **caractérisé par le fait que** lesdits moyens de formation (47) sont situés aux régions d'extrémité opposées desdits rails et un élément d'étrier précité respectif (10) est prévue, adapté à l'utilisation, pour coopérer avec chacune desdites régions d'extrémité.

9. Sous-ensemble de lame d'essuie-glace comprenant un élément d'essuie-glace (20), un moyen de support comprenant des rails (30a, 30b) s'étendant longitudinalement, reçus dans des rainures s'étendant longitudinalement dans une région de tête de l'élément d'essuyage (20), et au moins un élément d'étrier (10) tel que défini à l'une quelconque des revendications 1 à 6 s'engageant avec des moyens de formation (47) se présentant sous la forme d'une patte comprenant une extrémité recourbée vers le haut d'au moins l'un des rails (30a, 30b).

10. Mécanisme d'essuyage comprenant un sous-ensemble de lame d'essuie-glace tel que défini à la revendication 9.
